# EUROPÄISCHE PATENTSCHRIFT

(11) **EP 1 238 513 B1**
(45) Veröffentlichungstag und Bekanntmachung des Hinweises auf die Patenterteilung: **15.06.2005**
(21) Anmeldenummer: 00990515.9
(22) Anmeldetag: 11.12.2000
(51) Int. Cl.: H04L 29/06, H04L 12/28

(54) **VERFAHREN UND ANORDNUNG ZUR VERBESSERTEN AUSNUTZUNG VON TECHNISCHEN RESSOURCEN ZWISCHEN TELEKOMMUNIKATIONS- UND IP-NETZEN**
METHOD AND ARRANGEMENT FOR THE IMPROVED EXPLOITATION OF TECHNICAL RESOURCES BETWEEN TELECOMMUNICATIONS NETWORKS AND IP-NETWORKS
PROCEDE ET DISPOSITIF D'UTILISATION AMELIOREE DE RESSOURCES TECHNIQUES ENTRE DES RESEAUX DE TELECOMMUNICATION ET DES RESEAUX IP

(30) Priorität: 16.12.1999 DE 19960733
(43) Veröffentlichungstag der Anmeldung: 11.09.2002
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter, Dr.-Ing.
(86) Internationale Anmeldenummer: PCT/DE2000/004392
(87) Internationale Veröffentlichungsnummer: WO 2001/045352

(56) Entgegenhaltungen:
- WO-A-99/16266
- DE-A- 19 700 357
- HUBLET C ET AL: "SCALEABLE MODEL FOR HIGH SPEED PVC BASED ACCESS NETWORKS" PROCEEDINGS OF THE BROADBAND ACCESS CONFERENCE, XX, XX, Oktober 1999 (1999-10), Seiten 155-159, XP001023904
- METZ C: "AAA protocols: authentication, authorization, and accounting for the Internet" IEEE INTERNET COMPUTING, NOV.-DEC. 1999, IEEE, USA, Bd. 3, Nr. 6, Seiten 75-79, XP002177391 ISSN: 1089-7801

## Beschreibung

Die Erfindung betrifft ein Verfahren und eine Anordnung Anbindung eines teilnehmerseitigen Kommunikationsendgeräts an ein IP-Netz über ein vermittelndes Kommunikationsnetz, zur verbesserten Ausnutzung von technischen Ressourcen zwischen Telekommunikations- und IP-Netzen, beispielsweise zu Corporate LANs, zu IP-Serviceprovidern oder zum öffentlichem Internet, zwecks Ermöglichung kostengünstiger Dauerverbindungen (Always-On-Verbindungen) und zur Optimierung der IP-Adressökonomie.

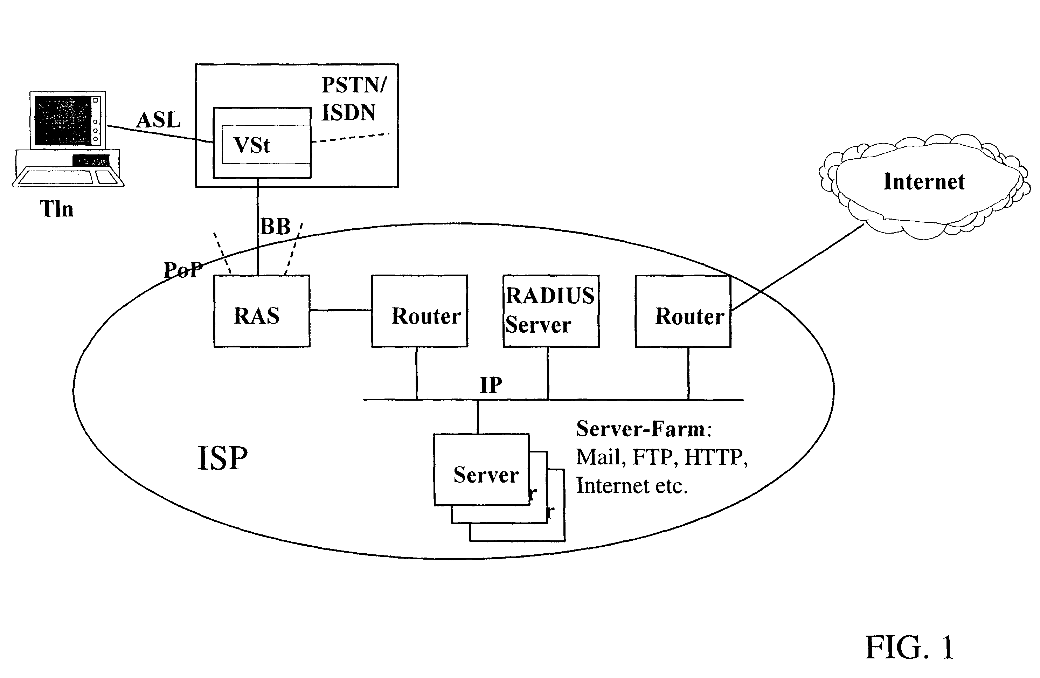

Das Internet ist heute eine rasant wachsende Informationsquelle und Transaktionsmöglichkeit für eine Vielzahl von Anwendungsszenarien. Möglich wurde dies durch internationale Standards, sowie durch kostengünstige und leicht zu handhabende Zugriffsmöglichkeiten über insbesondere den häuslichen PC. So besteht die häufigste Anschaltevariante im privaten Bereich sowie im Soho-Bereich (Small office - home office) derzeit in der Einwahlfunktion über ein öffentliches oder privates Telekommunikationsnetz, beispielsweise das analoge Telefonnetz (Public Switched Telephone Network) oder das ISDN-Netz (Integrated Services Digital Network). Hierbei sind Datenraten von 56 kbps, bzw. 64 kbps üblich. Eine weitere Variante besteht im drahtlosen Zugang, beispielsweise unter Verwendung eines zellularen Mobilfunknetzes (GSM ), mittels transparenter Wählverbindung über einen Bearer Service (BSxx) mit beispielsweise 9,6 kbps. Konfiguration und Zugangsprozedur erfolgen hierbei im allgemeinen stets auf die gleiche Weise (Fig.1). Der Anwender (Tln) ist mittels Modem oder Terminaladapter (TA) über die Anschlußleitung (ASL oder Funkstrecke) an die Vermittlungsstelle (VSt) seines Netzbetreibers angeschlossen. Der Zugangspunkt (PoP, Point of Presence) des Internet-Diensteanbieters (ISP, Internet Service Provider oder IAP, Internet Access Provider) befindet sich an der gleichen, oder einer anderen Vermittlungsstelle.
Die ISP-Architektur besteht dabei im allgemeinen aus zumindest einem Einwahlknoten (RAS, Remote Access Server), der meist über Basisband- oder Primärmultiplexverfahren an die VSt angeschlossen ist. Somit besteht im Verbindungsfall eine transparente Leitungsverbindung zwischen dem Tln und dem ISP. Weiterhin verfügt der ISP über ein sog. IP-Backbone, ein auf Internet Protokoll basierendes Netz, diverse Router als Verbindungspunkte zu externen IP-Netzen, z.B. zum Internet, sowie meist über eine Server-Farm mit diversen Dienstleistungsservern, wie FTP (File Transport Protocol), HTTP (Hypertext Transport Protocol), WAP (Wireless Application Protocol), Mail etc. Der RAS ist Bestandteil des ISP, kann prinzipiell aber auch zum Telekommunikationsnetz gehören.
Der Begriff ISP wird hier als Synonym für eine bestimmte (die beschriebene) Funktionalität verwendet. In der Regel sind Telekommunikationsnetzbetreiber und Internet Service Provider getrennt Unternehmen. Es ist jedoch sehr wohl möglich, dass beide Unternehmen einem gemeinsamen Konzern angehören, bzw. dass ein Telekommunikationsnetzbetreiber eine Internet-Dienste für seine Kunden anbietet und damit gleichzeitig ISP ist. Die technische Realisierung ist in diesen Fällen weitgehend identisch, so dass im folgenden für all diese Fälle nur von Telekommunikationsnetz und ISP gesprochen wird.

Die örtliche Nähe des RAS zur VSt ermöglicht reduzierte Übertragungskosten, da hier die Umsetzung zwischen leitungsvermittelter Übertragung und paketvermittelter Übertragung erfolgt. Insbesondere überregional arbeitende ISP besitzen daher regional verteilte Netzkomponenten, zumindest Einwahlknoten. Die Kommunikation zwischen RAS und ISP, bzw. zum IP-Backbone ist daher nicht mit LAN-Technik (Ethernet) realisierbar, sondern erfordert WAN- (Wide Area Network) Technik. Das Übertragungsvolumen rechtfertigt in der Regel keinen ATM- (Assynchrone Transfere Mode) Einsatz, so daß hier insbesondere E1/T1-Frame Relay-Technik auf der Basis von Primärmultiplexschnittstellen mit 32/24-Kanal-Sruktur zum Einsatz kommt, wobei jeder Kanal (Basisband-Kanal) für mehrere Tln genutzt werden kann. Hierzu ist für jeden Tln (für jedes Verbindungsverhältnis/Session) die Einrichtung eines virtuellen Kanals (PVC, Permanent Virtual Connection) erforderlich, der während der kompletten Session bestehen bleibt. Die Anzahl der PVC pro Primärmultiplexschnittstelle ist dabei begrenzt. Insbesondere dann, wenn Teilnehmer wenig kommunizieren, sind durch diese Restriktionen die Übertragungskapazitäten teilweise ungenutzt. Im Extremfall, wenn die Teilnehmer immer mit dem Internet verbunden sind, kann es beispielsweise vorkommen, dass je nach technischer Ausprägung pro 128 Kunden je eine Primärmultiplexschnittstelle zu schalten ist und darauf in der Nebenverkehrszeit überhaupt keine Übertragung stattfindet. Dies ist ein sehr aufwendiges Verfahren. Beim Einsatz von ATM-Verbindungen sind durch das SVC-Konzept (Switched Virtual Circuit) zwar mehr Kanäle schaltbar, die breitbandige Verbindung ist jedoch sehr teuer und SVCs sind ebenfalls nicht beliebig verfügbar.

In der Regel stellen ISPs ihre Dienste nicht unentgeltlich zur Verfügung, so daß eine zusätzliche Authentisierungs- und Billing-Einrichtung erforderlich ist, beispielsweise ein RADIUS-Server (Remote Access Dial In User Service).

Der Internet-Zugang erfolgt in der Regel in drei Schritten. Zunächst erfolgt mit dem netzüblichen Verbindungsverfahren, im allgemeinen eine Einwahl (Ziffernwahl) zum PoP. Nach entsprechender Authentisierung (wichtig für die Vergebührung der Dienste) wird der Zugang zu ISP-Diensten oder zum Internet gewährt. Letzteres erfolgt mittels transparenter IP-Verbindung.

Die Zugangsprozedur ist in der Regel unter Verwendung eines geeigneten Zugangssoftware des ISP, die sich auf dem PC (Personal Computer) des Tln befindet, automatisiert (beispielsweise T-Online-Zugangs-Software). Hierbei speichert der Tln meist einmalig die Einwahlnummer sowie seinen Namen und sein Kennwort (Paßwort) ein, welches er in der Regel zuvor durch ein Vertragsverhältnis mit dem ISP erworben hat. Möchte der Tln eine Verbindung zum ISP/Internet aufbauen, startet er zunächst die entsprechende Applikations-Software bzw. Zugangs-Software. Der Verbindungsaufbau erfolgt nach Initiierung des selbigen unter Verwendung des Modem oder TA über zumindest eine Vermittlungsstelle des Netzes zum PoP des ISP. Dabei wird nach Herstellung der leitungsvermittelten Wählverbindung zum Datenaustausch in der Regel das PPP Protokoll (Point-to-Point-Protocol) auf Schicht 2 gemäß ISO/OSI-Protokollarchitektur sowie schließlich IP (Internet Protokoll) auf Schicht 3 verwendet.
Der PoP verfügt in dieser Konstellation über den entsprechenden RAS, wo die Authentisierung mittels Benutzername und Paßwort erfolgt. Anschließend erhält der Benutzer eine dynamische IP-Adresse aus dem Pool des ISP, der für die gesamte Session gültig ist. Danach kann der Benutzer mittels entsprechender Software (beispielsweise Netscape Navigator oder Microsoft Explorer) die Internet-Dienste nutzen. Wenn der Tln die Verbindung abbaut oder trennt, wird die komplette Session im RAS beendet und die dynamische IP-Adresse kann erneut an einen anderen Benutzer vergeben werden.

Der RADIUS-Server arbeitet mit dem RAS-Server zusammen, wobei die funktionale Aufteilung meist herstellerspezifisch ist. In der Regel verfügt der RAS über die entsprechende Ansteuerung des Modem- oder TA-Pool und kommuniziert mittels RADIUS-Clint-Software mit dem RADIUS-Server. Der RADIUS-Server verwaltet die Kunden-Datenbank, die kundenspezifischen Kennworte, die subskribierten Dienste sowie die Gebührendaten.

Das Konzept der dynamischen IP-Adressen ist eine Notlösung, die aus dem Umstand geboren wurde, daß nicht beliebig viele Internet-Adressen zur Verfügung stehen. Der Anwender erhält die dynamische IP nur während der Zeit, zu der er zum Internet-Zugriff berechtigt ist (Session). Nach Deaktivierung kann die gleiche IP-Adresse an einen anderen Anwender vergeben werden, bzw. nach Neuaktivierung erhält der Anwender eine beliebige andere IP-Adresse. Nachteil der dynamischen IP: Anwender mit dynamischer IP können nicht als Ziel adressiert werden.

Die beschriebene Verfahrensweise besitzt den erheblichen Nachteil, daß während der kompletten Session (Gesamtzeit des Zugriffes auf den ISP) eine Leitungsverbindung zwischen Benutzer und ISP besteht, die in aller Regel erhebliche Kosten verursacht. Eine (aufwendige) Gegenmaßnahme der ISPs besteht darin, PoPs in allen Ortsnetzen der Netzbetreiber zu installieren, damit die Einwahlkosten für die Benutzer möglichst gering sind. Hierdurch steigt jedoch der systemtechnische Aufwand sowie der Leitungsaufwand der ISP beträchtlich.

Da die Einwahlprozedur samt Laden und Start der Applikations- und Browser-Software recht zeitaufwendig ist, würde der Tln gerne sein Terminal ständig eingeschaltet lassen (AoS Always on Service), so daß er bei Bedarf Transaktionen oder Datenzugriffe ohne Aktivierungszeit und damit ohne Zeitverlust durchführen kann. Ein typisches Beispiel hierfür ist der Internet-Nutzer, der den ganzen Tag über bei seinem ISP eingebucht sein möchte, um dann bedarfsgerecht einzelne Seiten von Zeit zu Zeit abzurufen, ohne jeweilige die umständliche und zeitaufwendige Software- und Einwahl-Prozedur mit Paßwort-Eingabe durchzuführen. Ein weiteres Beispiel ist die "PoS -Anwendung" (Point of Sale-Kreditkartenterminal) im Kaufhaus-Kassenbereich zur Hauptverkehrsstunde. Hier kommt es insbesondere auf verzögerungsfreie Transaktionen an. Da für viele Händler ein Datex-P-Anschluss zu teuer und unrentabel ist, ein Wählzugang zum Kreditkarten-Unternehmen aber für den Geschäftsablauf zu lange dauert, führen derzeit viele Händler lediglich eine sogenannte Offline-Authentisierung durch. D.h. sie überprüfen lediglich mittels eigener Datenbank, ob die vorliegende Kreditkarte bereits im eigenen Haus einen Schaden verursacht hat. Ein kostengünstiger AoS ist hier dringend erforderlich.

Als Folge der Leitungskosten reduziert der Anwender die Verbindungszeit derzeit auf das notwendige Maß und nimmt meist den situationsgesteuerten Wiederaufbau der Verbindung in Kauf. Diese Verhaltensweise begünstigt die IP-Adressvergabe. Je kürzer die mittlere Verbindungsdauer (Sessionsdauer) der Anwender ist, umso mehr Anwender kann der ISP mit dem gleichen Pool an dynamischen IP-Adressen bedienen. Diese Problematik verhindert jedoch bestimmte Anwendungen, wie beispielsweise PoS mit Scheckkarten-/Kreditkarten-Online-Authentisierung, da einerseits die permanenten Verbindungskosten zu hoch sind, andererseits die jeweiligen Aktivierungszeiten zu lang sind.

Eine Abhilfe der Leitungskostenproblematik bieten zukünftige paketorientierte Datennetze, wie beispielsweise der GPRS-Dienst (General Packet Radio Service) im GSM, die Nutzung des ISDN-D-Kanals für Internet-Access im ISDN oder breitbandige xDSL-Verfahren (Digital Subscriber Line) mit Auskopplung eines Paketdatenkanals vor der Vermittlungsstelle.

Diese Verfahren erlauben die Reduktion der Übertragungskanäle zumindest innerhalb der Telekommunikationsnetze, indem während der übertragungsfreien Zeit keine Netzressourcen belegt werden. Daher reduziert sich dieser Kostenanteil.

Ein AoS-Betrieb ist jedoch auch in diesen Fällen nicht unbegrenzt möglich, da nicht genügend IP-Adressen für alle Benutzer zur Verfügung stehen. Dieses Problem ist beispielsweise in "Breitbandzugang mit PPP-over-Ethernet und xDSL", Torsten Musiol, ntz 7/1999 beschrieben. Eine weitere ökonomische Grenze bilden die verfügbare Übertragungsmöglichkeiten (PVC, Übertragungskanäle, Leitungen etc.).

Die DE-A-197 00 357 offenbart ein Verfahren zur Anbindung eines Kommunikationsendgeräts an ein Datennetz. Bei diesem Verfahren wird eine bestehende gebührenpflichtige Verbindung zwischen dem Kommunikationsendgerät und dem Datennetz unterbrochen, sobald während einer bestimmten Zeitspanne keine Daten mehr über diese Verbindung übertragen worden sind. Hierbei wird die physikalische Verbindung zwischen Kommunikationsendgerät und Datennetz unterbrochen und es verbleibt eine sogenannte logische Verbindung, bei der für den Benutzer bestimmten Daten netzseitig so behandelt werden, als ob die Verbindung noch bestehen würde. Die Daten werden netzseitige zwischengespeichert. Zu gegebener Zeit erfolgt ein erneuter Verbindungsaufbau zwischen dem Kommunikationsendgerät und dem Datennetz, und die zwischengespeicherten Daten werden an den Benutzer übertagen. Es wird demnach die gesamte physikalische Verbindung ab- und wieder aufgebaut. Hierdurch ist stets auch das Endgerät in Verbindungsabbau und Wiederaufbau involviert, obwohl auch hier gewisse Sessiondaten zwischenzeitlich gespeichert werden.

Die WO-A-99 16266 beschreibt ein Verfahren zur Anbindung eines Kommunikationsendgeräts an ein Datennetz, bei dem, insbesondere für die Nutzung von Internetdiensten, der optimale Übertragungsweg den Datenaustausch zwischen einem Teilnehmerendgerät und einem Internetanbieter automatisch ermittelt und verwendet wird. Dabei kann zwischen einem leitungsvermittelten und einem paketvermittelten Datenübertragungsverfahren ausgewählt werden. Zur Nutzung beider Übertragungswege kann eine gemeinsame Authentisierungsprozedur vorgesehen sein. Eine Unterbrechung der Leitungsverbindung ist nicht vorgesehen.

Der Aufsatz von Hublet, C. et al.: "Scalable Model for High Speed PVC Based Access Networks", in Proceedings of the Broadband Access Conference, October 1999, Seiten 155-159, befasst sich mit Hochgeschwindigkeits-Internetzugangsnetzwerken, bei denen eine permanente virtuelle Verbindung zwischen dem Serviceprovider und dem Endnutzer besteht. Die Verbindungssteuerung und Authentisierung erfolgt durch eine spezielle, netzübergreifende Einrichtung.

In Metz, C.: "AAA Protocols; Authentication, Authorization and Accounting for the Internet", in IEEE Internet Computing, November-December 1999, IEEE, USA, Bd. 3, Nr. 6, Seiten 75-79, ISSN: 1089-7801, sind Verfahren zur Authentifizierung, Authorisierung und Abrechnung von Internetdienstleistungen unter Zuhilfenahme eines sogenannten Radius-Servers und Radius-Clients beschrieben, welche im Signalweg zwischen Endnutzer und Internet bzw. Internetprovider angeordnet sind.

### Erfindungsgemäße Aufgabe

Der vorliegenden Erfindung liegt die Aufgabe zugrunde, ein Verfahren vorzuschlagen, um beschränkte anwenderspezifische Ressourcen, wie IP-Adressbereiche, Übertragungskanäle und PVCs etc. zwischen Telekommunikationsnetz und ISPs effizienter zu nutzen, damit beispielsweise Always-On-Verbindungen zu ISPs, zu privaten IP-Netzen oder zum Internet etc. auch für große Anwenderzahlen unter vertretbarem technischen Aufwand realisiert werden können.

Gelöst wird diese Aufgabe durch die kennzeichnenden Merkmale der unabhängigen Patentansprüche. Vorteilhafte Ausgestaltungen und Weiterbildungen der Erfindung sind in den abhängigen Patentansprüchen angegeben.

### Erläuterung

Die Erfindung wird unter Verwendung von Zeichnungsfiguren, die hier lediglich eine mögliche Ausführungsart am Beispiel des GPRS-Dienstes im verbreiteten GSM-Netz in schematischer Darstellung beschreiben, erläutert, wobei sich anhand der Zeichnungsfiguren weitere Anwendungsgebiete und Ansprüche ergeben. Betreffend das GSM-Netz und den GPRS-Dienst sei allgemein verwiesen auf die Literaturstellen: "The GSM System for Mobile Communications, Michel Mouly, Marie-Bernadette Pautet, Cell&Sys-Verlag, Frankreich, 1992, ISBN 2-9507190-0-7, und die Spezifikation ETSI GSM 03.60 V6.2.0, 10/98, Digital Cellular Telecommunications System (Phase 2+); GPRS Service Description Stage 2. Es zeigt:
- Fig. 1: Zugangskonfiguration über Telekommunikationsnetz zum ISP bzw. Internet;
- Fig. 2: Konfiguration beim GPRS-Service des GSM-Netzes;
- Fig. 3: GPRS-Konfiguration unter Verwendung des erfindungsgemäßen Verfahrens;
- Fig. 4: Beispielkonfiguration der Zugangs-, Authentisierungs- und Multiplexeinrichtung und der zugehörigen Speichereinrichtung.

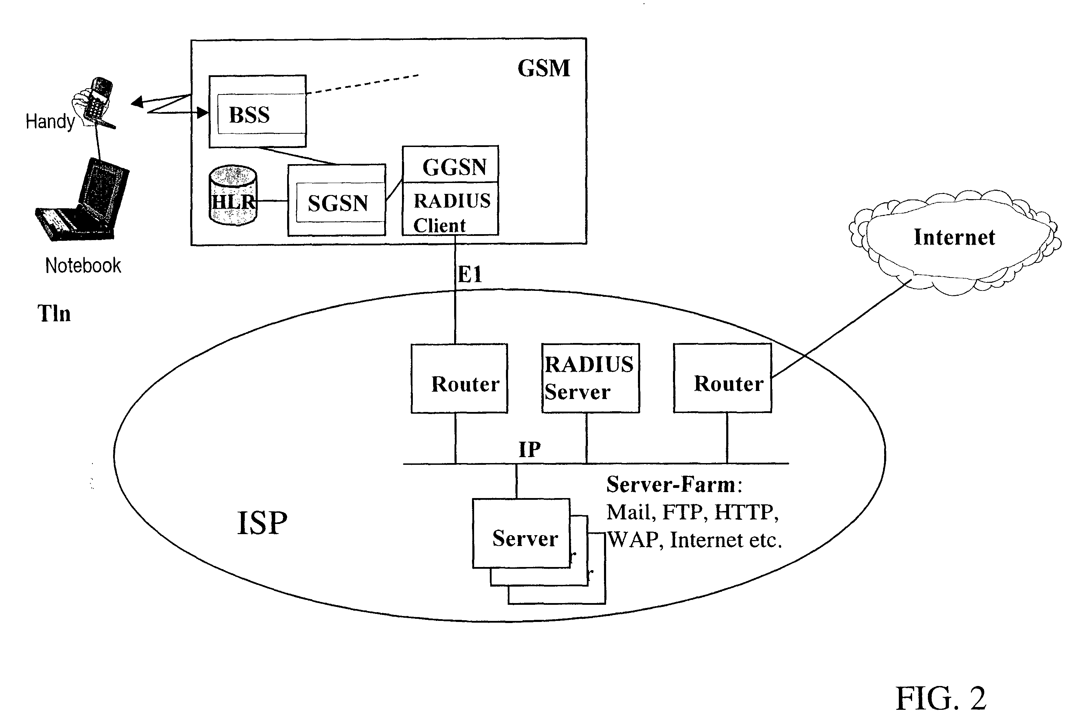

Fig. 2 zeigt den typischen ISP-Zugang mittels GPRS- Dienst des GSM-Netzes. Der GPRS-Dienst ist ein paketorientierter Übertragungsmode im zellularen GSM-Netz. Dabei wird der GPRS-Verkehr im Basestation Subsystem (BSS) ausgekoppelt und zum Serving GPRS Support Node (SGSN) geleitet. Der SGSN ist für das Mobility-Management der Endgeräte, die Authentisierung, die Verschlüsselung, die Datenkompression und die Fehlerkorrektur auf der Luftschnittstelle zuständig. Hierzu steht der SGSN insbesondere mit dem Home Location Register (HLR) des GSM-Netzes in Verbindung (Teilnehmerdatenbank) . Der SGSN ist mit dem Gateway GPRS Support Node GGSN verbunden. Dieser stellt die Verbindung zu externen IP-Netzen her, terminiert die netzinterne Paketverbindung zum Anwender, führt bedarfsweise Adresstransformationen (Network Address Translation, NAT, vgl.IETF RFC 1631 durch und bietet weiter Funktionen wie sicheres Tunneling durch externe Netze etc. Ein wesentliches Aufgabengebiet innerhalb GPRS ist auch die Authentisierung der Anwender zum jeweiligen externen IP-Netz. Hierzu besitzt jedes extern angeschaltete Netz einen Access Point Name (APN), für den die Zugriffsberechtigung des entsprechenden Anwenders im HLR gespeichert ist.

So kann das GSM-Netz zwar verifizieren, ob ein definierter Anwender "x" den Zugang zum ISP "y" mit einem definierten Quality of Service QoS "z" abonniert hat und diese Verbindung auch bepreisen, zum Aufbau einer tatsächlichen Verbindung ist jedoch auch hier die zusätzliche Authentisierung und Authorisierung (und Bepreisung) durch den ISP erforderlich. Hierzu verfügt der GGSN über einen RADIUS-Client, der die Zugriffsrechte mit dem ISP-RADIUS-Server klärt, vgl. IETF RFC 2138 und im positiven Fall eine IP-Verbindung zum ISP aufbaut. Zugleich wird die dynamischen IP-Adresse des ISP, vgl. IETF RFC 791 über diesen Weg zugeteilt. Der Zugang zu einem Firmennetz (Corporate LAN) erfolgt vergleichbar.

Der Verbindungsaufbau zum ISP erfolgt beim GPRS-Dienst in der Regel in 4 Stufen. Zunächst wird das "Handy" (Mobile Station MS) eingeschaltet und die Authentisierung des Netzzuganges anhand der auf dem Subscriber Identification Modul (GSM-Karte, SIM) abgespeicherten International MobileSubscriber Identity (Kartenidentifikationsnummer, IMSI) sowie dem Paßwort (PIN) des Tln geprüft.
Möchte der Tln zusätzlich Daten übertragen, kann der GPRS-Dienst eingeschaltet und die Diensteberechtigung verifiziert werden (GPRS-Attach). Danach erfolgt die ISP-Anwahl mit zweistufiger Authentisierung der Berechtigung (APN netzseitig und RADIUS ISP-seitig). Das MS sendet dazu einen PDP Context Request zum SGSN, der PDP-Typ, PDP-Adresse (gewünschte IP-Adress Variante), APN sowie bedarfsweise den QoS-Request enthält. Der SGSN baut in dieser Prozedur die Verbindung zum GGSN auf. Der GGSN terminiert die netzinterne PDP-Verbindung und baut seinerseits die Verbindung zum externen Netz auf, wobei ein eingebauter RADIUS-Client bedarfsweise stellvertretend für das MS mit dessen Zugangsdaten (Paßwort) eine RADIUS-Authentisierung (PAP, CHAP) mit einem etwaig vorhandenen RADIUS-Server im Zielnetz durchführt und bedarfsweise die dynamische IP-Adresse erhält (IPCP). Bedarfsweise baut der GGSN noch eine T2TP-Verbindung (Layer 2 Tunnelling Protocol) zum Zielnetz auf (Datenschutz). Schließlich steht die IP-Verbindung und der Anwender kann kommunizieren.
Der Verbindungsabbau erfolgt umgekehrt. Es steht dem Netzbetreiber bzw. der Software-Applikation des Anwenders frei, die Aktivierungs-Prozeduren vergleichbar dem im Festnetz üblichen Verfahren mehr oder weniger zu automatisieren.
In jedem Fall ist jedoch die gesamte Authentisierungsprozedur mit einem nicht unbeträchtlichen Zeitfaktor behaftet und damit für viele Anwendungen ein zeitkritisches Problem und/oder eine Bequemlichkeitseinbuße. Hinzu kommt noch der Umstand, dass der Tln meist einen PC (Notebook/ Palmtop etc.) für den Internet-Zugang verwendet. D.h. er muß dieses Gerät ebenfalls einschalten, das Betriebssystem booten, den Handy-Treiber laden (Verbindung Handy-Notebook), die Handy-seitige Kommunikation zum Notebook initiieren (RS232, IrDa, Bluetooth etc.) und die Verbindungsapplikation (Zugangs-Software) sowie den Internet-Browser starten. Das kostet zusätzliche Zeit und macht einen AoS dringend erforderlich.

Sowohl die virtuelle Verbindung zum ISP, als auch die IP-Adresse sind während der kompletten Session blockiert und verhindern somit jedoch eine Realisierung von AoS als Standarddienst für den Massenmarkt.

Ein ressourcenschonendes Verfahren zwischen GGSN und ISP würde den kostengünstigen AoS ermöglichen.

Die vorliegende Erfindung schlägt hierzu folgende Verfahrensweise vor.

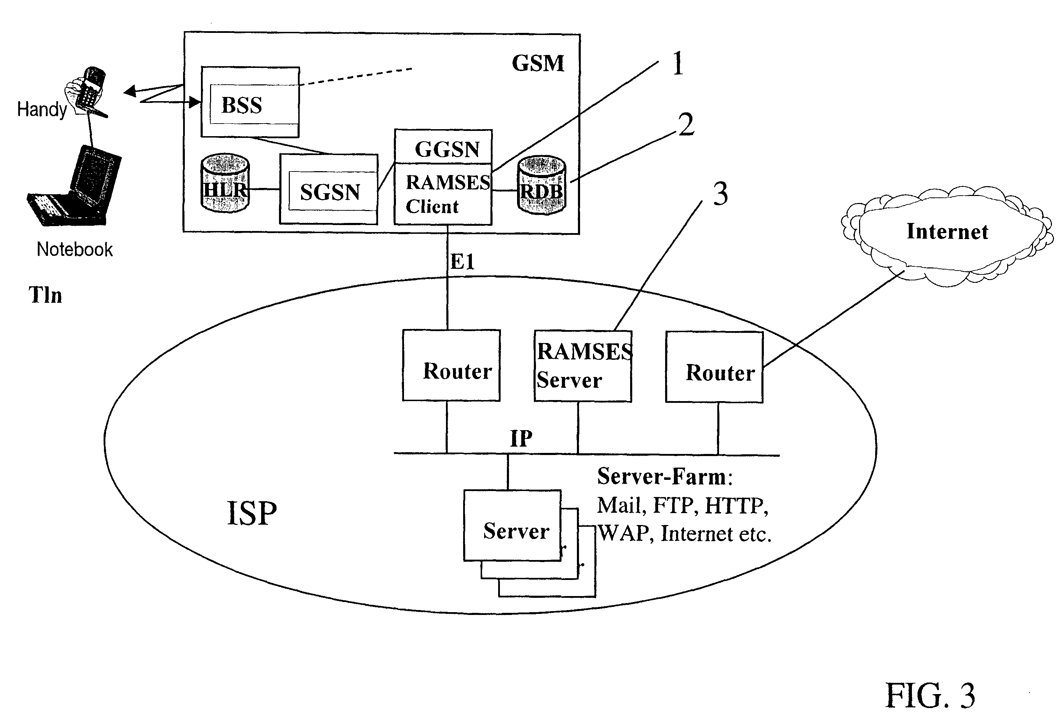

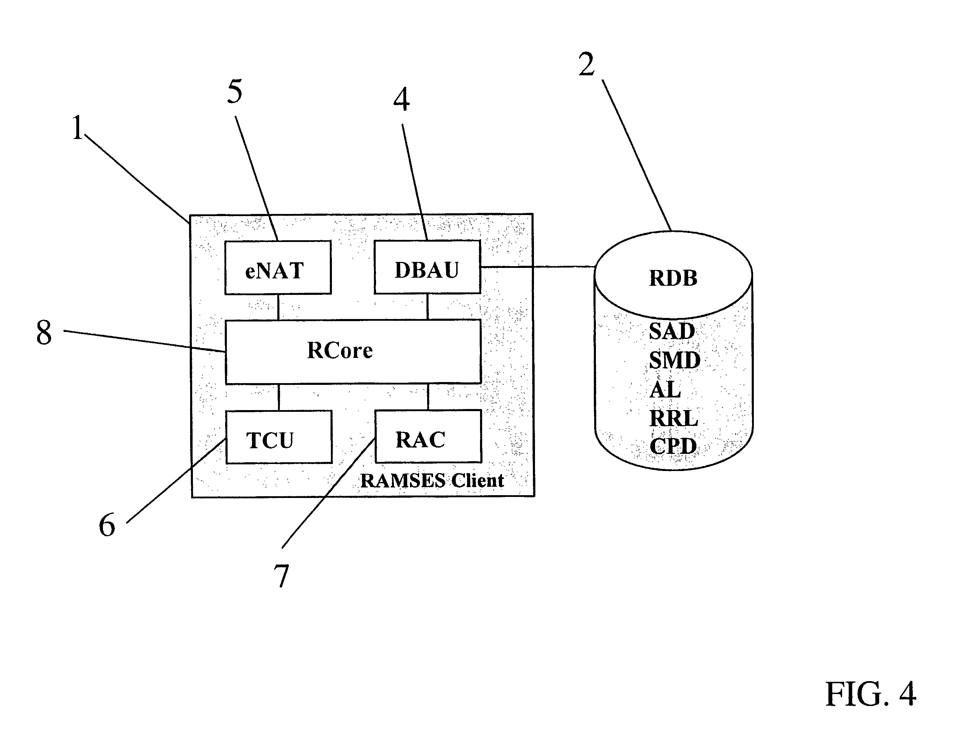

Gemäß Fig.3 wird eine Multplexeinrichtung für den ISP-Zugang eingeführt, hier mit RAMSES (Remote Access Management Subscriber Enhanced Service) bezeichnet. Der GGSN wird dazu funktional erweitert. Der RADIUS-Client wird gegen einen RAMSES-Client (RC/1) getauscht sowie um eine Speichereinrichtung bzw. Datenbank (RDB/2) erweitert, wobei der RAMSES-Client mit dem ISP-seitigen RAMSES-Server (3) kommuniziert. Der RAMSES-Client verfügt in einer möglichen Ausführungsart nach Fig 4 über eine zentrale Steuereinrichtung (RCore/8), über eine Datenbankansteuereinrichtung (DBAU/4), eine erweiterte IP-Adress-Transformationseinrichtung (eNAT/5), eine Datenverkehrsüberwachungs-einrichtung (TCU/6) sowie eine Zugriffssteuerung für den RAMSES-Server (RAC/7). Zusätzlichen RAMSES-Funktionen, wie Tunnelling Protocolle, DHCP-Service etc. sind entsprechend den IP-Standards möglich und sinnvoll, tragen an dieser Stelle jedoch nicht notwendigerweise zur Erläuterung der Erfindung bei.

Der Verbindungsaufbau erfolgt gemäß der beschriebenen Verfahrensweise, hier jedoch zwischen RAMSES-Client und RAMSES-Server. Der RAMSES-Client speichert dabei die anwenderspezifischen Authentisierungsdaten des IP-Netzes (Session Authentication Data, SAD) in der RDB (2) im Zusammenhang mit den erforderlichen kundenspezifischen Verbindungsdaten (Session Management Data, SMD; bzw. PDP Context Data) ab.

Die TCU erkennt, ob anwenderspezifisch ein Datenverkehr stattfindet. Nach vordefinierten Kriterien, wie beispielsweise eine übertragungsfreie Zeitdauer, baut der GGSN die Verbindung zum ISP über die RAC wieder ab, behält jedoch entgegen dem üblichen Verfahren die Verbindung zum Anwender bei, so daß dieser Vorgang für den Anwender transparent erfolgt. Der neue Verbindungsstatus wird dabei im SMD-Register aktualisiert.

Die dynamische IP-Adresse des ISP und weitere Interface-Ressourcen können nun anderweitig belegt werden.

Wenn der Anwender erneut Datenpakete sendet, wird dies durch die TCU erkannt. Der RAMSES-Client führt unter Zugriff auf die abgespeicherten SAD eine neue ISP-Authentisierung automatisch durch und aktiviert die Verbindung zum ISP. Hierbei erhält er eine neue dynamische IP-Adresse und ordnet diese der internen Verbindung zum Tln erneut zu. Die Adressverwaltung und Zuordnung erfolgt mittels eNAT-Unit, die Speicherung der Daten (Address List, AL) in der RDB.
Da eine Änderung der IP-Adresse während einer bestehenden IP-Session nicht definiert ist, basiert das erfindungsgemäße Verfahren auf der NAT-Anwendung, wobei als Erweiterung des bekannten NAT-Verfahren die jeweilige externe Adresse auch während einer Tln-Session bedarfsweise immer wieder neu der abgespeicherten internen Adresse zuordnet wird.

Der gesamte Vorgang erfolgt, abgesehen von einem geringfügigen Zeitverlust für die erneute Authentisierungs-Prozedur, völlig transparent für den Anwender und ermöglicht somit die Tln-seitige Nutzung von AoS der Netzbetreiber/ISP auch für eine Vielzahl gleichzeitiger Anwender im Massenmarkt.

Weiterhin enthält die RDB optional kundenspezifische Daten (Customer Profile Data, CPD) als Tln-individuelles Kriterium für Ab- und Wiederaufbau der Verbindung zum ISP (Zeitkriterium, Priorität, QoS etc.).

Der RAMSES-Client arbeitet aus Kompatibilitätsgründen zu bestehenden Anwendungen auch mit bestehenden RADIUS-Servern zusammen, da die erforderlichen zusätzlichen Aktivitäten im RAMSES-Client durchgeführt werden.
Der RAMSES-Server ermöglicht optional zusätzliche Funktionen, wie beispielsweise die ISP-seitige Erkennung, der kompletten Tln-Session, beispielsweise für Gebührenzwecke.
Weiterhin kann durch besondere Protokollerweiterungen zwischen RAMSES-Client und RAMSES-Server ein ISP-seitige Erreichbarkeit des Tln auch im deaktivierten Zustand der Verbindung zwischen beiden Einrichtungen erreicht werden, was beispielsweise durch zusätzliche Nutzung von Portadressen (IP-Masquerading), eines eigenen IP-Adressbereiches oder einer eigenen Kennzeichnung für deaktivierte Verbindungen auf dieser Teilstrecke erfolgen kann. Eine typische Anwendung hierfür ist die ISP-initiierte e-mail-Zustellung zum Tln bei deaktivierter Verbindung.
Eine ISP-seitige Aktivierung kann beispielsweise in der Art realisiert werden, daß der RAMSES-Server eine Aktivierungsaufforderung mit einer gemeinsam bekannten Tln-Referenz an den RAMSES-Client verschickt, wonach der RAMSES-Client eine Aktivierung in gleicher Weise durchführt, wie bei der Tln-seitigen Versendung von Datenpaketen.
Dies kann beispielsweise ein e-mail-Request sein, der Clientseitig um IP-Adresse und TCP-Port-Nummer erweitert und zum ISP-e-mail-Server gespiegelt wird. Die Referenzadresse für deaktivierte Tln (Reverse Reference List, RRL) ist clientseitig in der RDB gespeichert und gilt zumindest für eine Tln-Session.

Die RDB kann bedarfsweise durch Erweiterung etwaig bestehender Datenbanken (beispielsweise HLR im GSM-Netz) gebildet werden.

Das RAMSES-Verfahren erlaubt optional eine zweckdienliche Aufteilung der Client-Anteile auf unterschiedliche Netzknoten. So kann es beispielsweise zur Optimierung der netzinternen Datenhaltung, oder zur Erweiterung des Anwendungsbereiches, wie beispielsweise die Nutzung des RAMSES-Verfahrens für AoS-Verbindungen beim GPRS-International Roaming oder der Datenübertragung zwischen zwei GPRS-Netzen etc. sinnvoll sein, die RAMSES-Funktionalität beispielsweise auf SGSN (RCore, TCU und DBAU), auf HLR (RDB mit SAD, SMD, CPD) sowie auf GGSN (eNAT, RAC, AL und RRL) aufzuteilen.

### Abkürzungen

- AL: Address List
- AoS: Always On Service
- APN: Access Point Name
- BB: Basisband
- Bluetooth: Serielle Infrarot-Schnittstelle (www.bluetooth.com)
- BSS: Bassstation Subsystem
- CHAP: Challenge Handshake Authentication Protocol
- CPD: Customer Profile Data
- DBAU: Databse Access Unit
- DHCP: Dynamic Host Configuration Protocol
- eNAT: enhanced NAT
- GGSN: Gateway GPRS Support Node
- GSM: Global System for Mobile Communications
- HLR: Home Location Register
- IMSI: International MobileSubscriber Identity
- IP: Internet Protokoll
- IrDa: Infrared Data Association (www.Irda.org)
- ISDN: Integrated Services Digital Network
- ISM: Internet Session Multiplex Service
- LAN: Local Area Network
- MS: Mobile Station
- NAT: Network Adress Translation
- PAP: Password Authentication Protocol
- PC: Personal Computer
- PDP: Pached Data Protocol
- PIN: Personal Identication Number
- PoP: Point of Presence
- PPP: Point-to-Point-Protocol
- PSTN: Public Switched Telephone Network
- PVC: Permanent Virtual Connection
- QoS: Quality of Service
- RAC: Remote Access Control
- RADIUS: Remote Access Dial In User Service
- RAMSES: Remote Access Management Subscriber Enhanced Service
- RAS: Remote Access Server
- RC: RAMSES Client
- RCore: RAMSES Core
- RDB: RAMSES Datebase
- RRL: Reverse Referrence List
- RS232: Serielle Kommunikationsschnittstelle
- SAD: Session Authentication Data
- SAD-DB: SAD-Datenbank
- SGSN: Serving GPRS Support Node
- SIM: Subscriber Identification Modul
- SMD: Session Management Date
- Soho: Small office/home office
- SVC: Switched Virtual Circuit
- T2TP: Layer 2 Tunnelling Protocol
- TA: Terminal Adapter
- TCU: Traffic Control Unit
- Tln: Teilnehmer
- UMTS: Universal Mobile Telecommunication Services
- VSt: Vermittlungsstelle
- WAN: Wide Area Network
- xDSL: Digital Subscriber Line

## Patentansprüche

1. Verfahren zur Anbindung eines teilnehmerseitigen Kommunikationsendgeräts an ein IP-Netz über ein vermittelndes Kommunikationsnetz, wobei eine im Kommunikationsnetz oder in einem Einwahlknoten des IP-Netzes angeordnete Zugangs-, Authentisierungs- und Multiplexeinrichtung (1) über eine erste Authentisierungseinrichtung (7) verfügt, welche mit einer im IP-Netz eingerichteten zweiten, Internet Service Provider-spezifischen Authentisierungseinrichtung (3) in Verbindung steht, **dadurch gekennzeichnet, dass** die Zugangs-, Authentisierungs- und Multiplexeinrichtung (1) während der verkehrsfreien Zeit einer IP-Verbindung zwischen dem Teilnehmer und dem IP-Netz die Verbindung zwischen Telekommunikationsnetz und IP-Netz deaktiviert und der IP-Verbindung zugeordnete teilnehmer- und sessionspezifische Authentisierungsdaten SAD speichert, während die Verbindung zwischen dem teilnehmerseitigen Kommunikationsendgerät und dem Kommunikationsnetz physikalisch erhalten bleibt, und bei erneutem Datenverkehr des Teilnehmers die betroffene IP-Verbindungunter Rückgriff auf die abgespeicherten teilnehmer- und sessionspezifischen Authentisierungsdaten automatisch wieder aktiviert.

2. Verfahren nach Anspruch 1, **dadurch gekennzeichnet, dass** eine statistische Ausnutzung von begrenzten Ressourcen zwischen Telekommunikations- und IP-Netz, wie dynamische IP-Adressen, PVCs, Übertragungskanäle oder Leitungen, für mehrere Teilnehmer durchgeführt wird, und das Verfahren ohne Aktivitäten der betroffenen Teilnehmer während der andauernden Session und somit unbemerkt und transparent arbeitet.

3. Verfahren gemäß einem der Ansprüche 1 oder 2, **dadurch gekennzeichnet, daß** die SAD bei einem teilnehmergesteuerten Verbindungsaufbau, d.h. bei einer Initialisierung einer IP-Verbindung, seitens der Zugangs-, Authentisierungs- und Multiplexeinrichtung (1) abgespeichert werden und zeitweise, zumindest während der kompletten teilnehmerspezifischen IP-Verbindung in einer besonderen Speichereinrichtung RDB (2) gespeichert bleiben und zum jeweiligen Verbindungsaufbau zwischen Telekommunikationsnetz und IP-Netz seitens der Zugangs-, Authentisierungs- und Multiplexeinrichtung (1) während einer bestehenden IP-Verbindung jeweils ausgelesen und verwendet werden.

4. Verfahren gemäß einem der Ansprüche 1 bis 3, **dadurch gekennzeichnet, daß** die SAD bei jeder teilnehmerseitigen Initialisierung einer neuen IP-Verbindung überschrieben und damit neu gespeichert werden, wodurch seitens der Zugangs-, Authentisierungs- und Multiplexeinrichtung (1) eine Berücksichtigung geänderter ISP-Authentisierungsdaten automatisch erfolgt.

5. Verfahren gemäß einem der Ansprüche 1 bis 4, **dadurch gekennzeichnet, daß** die SAD automatisch beim Abbau einer IP-Verbindung gelöscht werden, um Datenmißbrauch vorzubeugen.

6. Verfahren gemäß einem der Ansprüche 3 bis 5, **dadurch gekennzeichnet, daß** die Zugangs-, Authentisierungs- und Multiplexeinrichtung (1) eine IP-Adresstransformation eNAT in der Art durchführt, daß ISP-seitig zugewiesene dynamische Teilnehmer-IP-Adressen bei jeder Verbindungsaktivierung seitens der Zugangs-, Authentisierungs- und Multiplexeinrichtung (1) in der RDB (2) neu gespeichert werden und für den beidseitigen Datenverkehr zwischen Teilnehmerseite und ISP-Seite verwendet werden, wobei in Erweiterung zum herkömmlichen NAT-Verfahren hierbei auch eine mehrfache Adresszuordnung während einer IP-Verbindung realisierbar ist, und die Adressdaten in Form einer Adressliste AL in der RDB (2) gespeichert werden.

7. Verfahren gemäß einem der Ansprüche 1 bis 6, **dadurch gekennzeichnet, daß** seitens der Zugangs-, Authentisierungs- und Multiplexeinrichtung (1) eine Überwachung des teilnehmerspezifischen Datenverkehrs mittels entsprechender Überwachungseinrichtung (6) durchgeführt wird und als Grundlage für die Deaktivierung der IP-Verbindung verwendet wird, wobei zeitliche Kriterien, wie die Dauer der übertragungsfreien Zeit, als Kriterium für eine Deaktivierung herangezogen werden.

8. Verfahren gemäß einem der Ansprüche 3 bis 7, **dadurch gekennzeichnet, daß** Kriterien für die Deaktivierung der Verbindung zwischen Telekommunikationsnetz und IP-Netz teilnehmerspezifisch in der Speichereinrichtung RDB (2) abgespeichert sind und für jeden Teilnehmer zumindest netzbetreiberseitig, optional auch teilnehmerseitig, änderbar sind.

9. Verfahren gemäß einem der Ansprüche 3 bis 8, **dadurch gekennzeichnet, daß** Kriterien für die Aktivierung der Verbindung zwischen Telekommunikationsnetz und IP-Netz teilnehmerspezifisch in der Speichereinrichtung RDB (2) abgespeichert sind und zumindest netzbetreiberseitig, optional auch teilnehmerseitig, änderbar sind, wobei neben dem Kriterium der Datenübertragung zusätzliche Prioritätskriterien für die Reaktivierung, wie Prioritätsklassen oder abonnierter QoS, realisierbar sind.

10. Verfahren gemäß einem der Ansprüche 1 bis 9, **dadurch gekennzeichnet, daß** ein Informationsaustausch zwischen der Zugangs-, Authentisierungs- und Multiplexeinrichtung (1) und der zweiten Authentisierungseinrichtung (3) um entsprechende Informationen erweitert wird, um eine IP-Verbindung über alle Deaktivierungsphasen der Zugangs-, Authentisierungs- und Multiplexeinrichtung (1) zu erkennen.

11. Verfahren gemäß einem der Ansprüche 1 bis 10, **dadurch gekennzeichnet, daß** ein Informationsaustausch zwischen der Zugangs-, Authentisierungs- und Multiplexeinrichtung (1) und der zweiten Authentisierungseinrichtung (3) um entsprechende Informationen erweitert wird, um eine ISP-seitige Aktivierung temporär deaktivierter Verbindungen zwischen den Einrichtungen zu ermöglichen, um e-mail-Verkehr zum Teilnehmer zu ermöglichen.

12. Verfahren gemäß einem der Ansprüche 3 bis 11, **dadurch gekennzeichnet, daß** zum Zwecke der ISP-seitigen Reaktivierung einer deaktivierten Verbindung eine Referenzadresse zwischen der Zugangs-, Authentisierungs- und Multiplexeinrichtung (1) und der zweiten Authentisierungseinrichtung (3) vereinbart wird, die seitens der Zugangs-, Authentisierungs- und Multiplexeinrichtung (1) innerhalb einer entsprechenden Liste RRL in der Speichereinrichtung RDB (2) gepflegt wird.

13. Verfahren gemäß Anspruch 12, **dadurch gekennzeichnet, daß** die zweite Authentisierungseinrichtung (3) zum Zwecke der ISP-seitigen Reaktivierung einer deaktivierten Verbindung die betreffende Referenzadresse innerhalb einer Aktivierungsaufforderung an die Zugangs-, Authentisierungs- und Multiplexeinrichtung (1) sendet, die demgemäß eine Aktivierung der Teilnehmer-Verbindung zum ISP durchführt.

14. Verfahren gemäß einem der Ansprüche 3 bis 13, **dadurch gekennzeichnet, daß** die Funktionalität der Speichereinrichtung RDB (2) als Erweiterung von im Kommunikationsnetz vorhandenen Datenbanken realisiert ist.

15. Verfahren gemäß einem der Ansprüche 1 bis 14, **dadurch gekennzeichnet, daß** die Funktionalitäten der Zugangs-, Authentisierungs- und Multiplexeinrichtung (1) und der zweiten Authentisierungseinrichtung (3) auf unterschiedliche Netzknoten innerhalb des Telekommunikationsnetzes, wie SGSN, GGSN und HLR im GSM-Netz oder auf mehrere Netzkomponenten eines ISP-Netzes, oder auf Netzknoten beider Netze aufgeteilt sind.

16. Verfahren gemäß einem der Ansprüche 1 bis 15, **dadurch gekennzeichnet, daß** die Funktionalitäten der Zugangs-, Authentisierungs- und Multiplexeinrichtung (1) und der zweiten Authentisierungseinrichtung (3) auch zwischen gleichartigen oder unterschiedlichen Telekommunikationsnetzen mit Paketdatenvermittlung zur Anwendung kommt, wie zwischen zumindest GSM-GPRS-Netzen, UMTS-Netzen und/oder X.25-Netzen.

17. Anordnung zur Anbindung eines teilnehmerseitigen Kommunikationsendgeräts an ein IP-Netz über ein vermittelndes Kommunikationsnetz, wobei eine im Kommunikationsnetz oder in einem Einwahlknoten des IP-Netzes angeordnete Zugangs-, Authentisierungs- und Multiplexeinrichtung (1) über eine erste Authentisierungseinrichtung (7) verfügt, welche mit einer im IP-Netz eingerichteten zweiten, Internet Service Provider-spezifischen Authentisierungseinrichtung (3) in Verbindung steht,
wobei die Anordnung **gekennzeichnet ist durch** die Zugangs-, Authentisierungs- und Multiplexeinrichtung (1) zur Deaktivierung der Verbindung zwischen Telekommunikationsnetz und IP-Netz während der verkehrsfreien Zeit einer IP-Verbindung zwischen dem Teilnehmer und dem IP-Netz und Aufrechterhaltung der Verbindung zwischen dem teilnehmerseitigen Kommunikationsendgerät und dem Kommunikationsnetz, und eine Speichereinrichtung RDB (2) zur Speicherung von der IP-Verbindung zugeordneten teilnehmer- und sessionspezifischen Authentisierungsdaten, wobei die betroffene IP-Verbindung bei erneutem Datenverkehr des Teilnehmers **durch** die Zugangs-, Authentisierungs- und Multiplexeinrichtung (1) automatisch aktiviert wird, unter Rückgriff auf die in der RDB abgespeicherten teilnehmer- und sessionspezifischen Authentisierungsdaten.

18. Anordnung gemäß Anspruch 17 , **dadurch gekennzeichnet, daß** Speicher für die teilnehmer- und sessionspezifischen Authentisierungsdaten (SAD) beim teilnehmergesteuerten Verbindungsaufbau, d.h. der Initialisierung einer Session, seitens der Zugangs-, Authentisierungs- und Multiplexeinrichtung (1) vorhanden sind, und dass für die teilnehmer- und sessionspezifischen Authentisierungsdaten (SAD) zum zeitweisen Speichern, zumindest während der kompletten teilnehmerspezifischen Session die Speichereinrichtung RDB (2) zur Verfügung steht, die mit der Zugangs-, Authentisierungs- und Multiplexeinrichtung (1) verbunden ist.

## Claims

1. Method for linking a subscriber-side communication terminal to an IP network via a switched communication network, wherein an access, authentication and multiplex device (1), arranged in the communication network or in a dial-up node of the IP network, has a first authentication device (7), which is connected to a second authentication device (3) specific to the internet service provider, installed in the IP network, **characterised in that** the access, authentication and multiplex device (1) deactivates the connection between the telecommunication network and the IP network during the traffic-free time of an IP connection between the subscriber and the IP network and stores subscriber- and session-specific authentication data SAD assigned to the IP connection, while the connection between the subscriber-side communication terminal and the communication network is physically retained, and automatically re-activates the IP connection in question when there is renewed data traffic of the subscriber, with recourse to the stored subscriber-and session-specific authentication data.

2. Method according to claim 1, **characterised in that** statistical utilisation of limited resources between the telecommunication and IP networks, such as dynamic IP addresses, PVCs, transmission channels or lines, is performed for several subscribers and the method operates without activities of the subscribers in question during the ongoing session and thus unnoticed and transparently.

3. Method according to one of claims 1 or 2, **characterised in that** the SAD are stored on the part of the access, authentication and multiplex device (1) during a subscriber-controlled connection set-up, i.e. during initialisation of an IP connection, and remain temporarily stored in a special memory device RDB (2), at least during the complete subscriber-specific IP connection, and are read out and used in each case during an existing IP connection on the part of the access, authentication and multiplex device (1) for the respective connection set-up between the telecommunication network and the IP network.

4. Method according to one of claims 1 to 3, **characterised in that** the SAD are overwritten each time a new IP connection is initialised on the subscriber side and therefore newly stored, whereby changed ISP authentication data are automatically taken into consideration on the part of the access, authentication and multiplex device (1).

5. Method according to one of claims 1 to 4, **characterised in that** the SAD are automatically deleted when an IP connection is deconstructed, in order to avoid misuse of data.

6. Method according to one of claims 3 to 5, **characterised in that** the access, authentication and multiplex device (1) performs an IP address transformation eNAT of such a kind that dynamic subscriber IP addresses assigned to the ISP side are newly stored in the RDB (2) on the part of the access, authentication and multiplex device (1) for each connection activity and used for data traffic on both sides between the subscriber side and the ISP side, wherein, as an extension to the conventional NAT method, in this case multiple assigning of addresses can also be implemented during an IP connection and the address data are stored in the form of an address list AL in the RDB (2).

7. Method according to one of claims 1 to 6, **characterised in that** monitoring of the subscriber-specific data traffic is performed on the part of the access, authentication and multiplex device (1) by means of an appropriate monitoring device (6) and used as the basis for deactivation of the IP connection, wherein time criteria, such as the length of the transmission-free time, are drawn on as the criterion for deactivation.

8. Method according to one of claims 3 to 7, **characterised in that** criteria for deactivation of the connection between the telecommunication network and the IP network are stored in the memory device RDB (2) as subscriber-specific and can be changed for each subscriber at least on the network operator side, optionally also on the subscriber side.

9. Method according to one of claims 3 to 8, **characterised in that** criteria for activation of the connection between the telecommunication network and the IP network are stored in the memory device RDB (2) as subscriber-specific and can be changed at least on the network operator side, optionally also on the subscriber side, wherein, as well as the criterion of data transmission, additional priority criteria for reactivation, such as priority classes or subscribed QoS, can be implemented.

10. Method according to one of claims 1 to 9, **characterised in that** an exchange of information between the access, authentication and multiplex device (1) and the second authentication device (3) is extended by appropriate information, in order to identify an IP connection over all the deactivation phases of the access, authentication and multiplex device (1).

11. Method according to one of claims 1 to 10, **characterised in that** an exchange of information between the access, authentication and multiplex device (1) and the second authentication device (3) is extended by appropriate information, in order to enable activation on the ISP side of temporarily deactivated connections between the devices, in order to enable email traffic to the subscriber.

12. Method according to one of claims 3 to 11, **characterised in that**, for the purpose of ISP-side reactivation of a deactivated connection, a reference address is agreed between the access, authentication and multiplex device (1) and the second authentication device (3), which is maintained on the part of the access, authentication and multiplex device (1) in an appropriate list RRL in the memory device RDB (2).

13. Method according to claim 12, **characterised in that**, for the purpose of ISP-side reactivation of a deactivated connection, the second authentication device (3) sends the reference address in question within an activation request to the access, authentication and multiplex device (1), which accordingly performs activation of the subscriber connection to the ISP.

14. Method according to one of claims 3 to 13, **characterised in that** the functionality of the memory device RDB (2) is implemented as an extension of databases present in the communication network.

15. Method according to one of claims 1 to 14, **characterised in that** the functionalities of the access, authentication and multiplex device (1) and the second authentication device (3) are distributed over different network nodes within the telecommunication network, such as SGSN, GGSN and HLR in the GSM network, or over several network components of an ISP network or over network nodes of both networks.

16. Method according to one of claims 1 to 15, **characterised in that** the functionalities of the access, authentication and multiplex device (1) and the second authentication device (3) are also applied between telecommunication networks of identical kinds or different networks with packet data communication, such as at least between GSM-GPRS networks, UMTS networks and/or X.25 networks.

17. Arrangement for linking a subscriber-side communication terminal to an IP network via a switched communication network, wherein an access, authentication and multiplex device (1), arranged in the communication network or in a dial-up node of the IP network, has a first authentication device (7), which is connected to a second authentication device (3) specific to the internet service provider, installed in the IP network, the arrangement being **characterised by** the access, authentication and multiplex device (1) for deactivating the connection between the telecommunication network and the IP network during the traffic-free time of an IP connection between the subscriber and the IP network and retaining the connection between the subscriber-side communication terminal and the communication network and a memory device RDB (2) for storing the subscriber- and session-specific authentication data assigned to the IP connection, wherein the IP connection in question is automatically activated by the access, authentication and multiplex device (1) when there is renewed data traffic of the subscriber, with recourse to the subscriber-and session- specific authentication data stored in the RDB.

18. Arrangement according to claim 17, **characterised in that** memories for the subscriber- and session-specific authentication data (SAD) are present during the subscriber-controlled connection set-up, i.e. the initialisation of a session, on the part of the access, authentication and multiplex device (1) and **in that** the memory device RDB (2) which is connected to the access, authentication and multiplex device (1) is available for the subscriber- and session-specific authentication data (SAD) for temporary storage, at least during the complete subscriber-specific session.

## Revendications

1. Procédé pour relier un terminal de communication prévu côté abonné à un réseau IP par l'intermédiaire d'un réseau de communication à commutation, selon lequel un dispositif d'accès, d'authentification et de multiplexage (1) disposé dans le réseau de communication ou dans un noeud de numérotation directe du réseau IP dispose d'un premier dispositif d'authentification (7) qui est en communication avec un second dispositif d'authentification (3), propre au fournisseur de service Internet et installé dans le réseau IP, **caractérisé en ce que** le dispositif d'accès, d'authentification et de multiplexage (1), pendant la durée sans trafic d'une liaison IP entre l'abonné et le réseau IP, désactive la liaison entre le réseau de télécommunication et le réseau IP, et met en mémoire des données d'authentification propres à l'abonné et à la session SAD qui sont associées à la liaison IP, pendant que la liaison est maintenue physiquement entre le terminal de communication prévu côté abonné et le réseau de communication, et lors d'un nouveau trafic de données de l'abonné, le dispositif (1) réactive automatiquement la liaison IP concernée avec le recours aux données d'authentification propres à l'abonné et à la session qui ont été mises en mémoire.

2. Procédé selon la revendication 1, **caractérisé en ce qu'**une exploitation statistique de ressources limitées entre le réseau de télécommunication et le réseau IP, comme des adresses IP dynamiques, des circuits virtuels permanents (PVC), des canaux de transmission ou des lignes est réalisée pour plusieurs abonnés, et le procédé fonctionne sans activités des abonnés concernés pendant la session qui se poursuit, et donc de manière inaperçue et transparente.

3. Procédé selon la revendication 1 ou 2, **caractérisé en ce que** les données SAD, lors d'un établissement de liaison commandé par l'abonné, c'est-à-dire lors d'une initialisation d'une liaison IP, sont mises en mémoire du côté du dispositif d'accès, d'authentification et de multiplexage (1) et restent stockées temporairement, au moins pendant la liaison IP complète propre à l'abonné, dans un dispositif de mémorisation spécial RDB (2) et sont extraites et utilisées pour l'établissement de liaison correspondant entre le réseau de télécommunication et le réseau IP du côté du dispositif d'accès, d'authentification et de multiplexage (1) pendant une liaison IP existante.

4. Procédé selon l'une des revendications 1 à 3, **caractérisé en ce que** les données SAD sont effacées et donc à nouveau mises en mémoire à chaque initialisation d'une nouvelle liaison IP côté abonné, moyennant quoi côté dispositif d'accès, d'authentification et de multiplexage (1), une prise en compte des données d'authentification ISP (de fournisseur de service Internet) modifiées a lieu automatiquement.

5. Procédé selon l'une des revendications 1 à 4, **caractérisé en ce que** les données SAD sont effacées automatiquement lors de la fin d'une liaison IP, afin de prévenir une utilisation abusive des données.

6. Procédé selon l'une des revendications 3 à 5, **caractérisé en ce que** le dispositif d'accès, d'authentification et de multiplexage (1) effectue une transformation d'adresse IP eNAT (translation d'adresse de réseau améliorée) grâce au fait que les adresses IP d'abonné dynamiques qui sont affectées côté ISP sont à nouveau mises en mémoire dans le dispositif RDB (2) lors de chaque activation de liaison du côté du dispositif d'accès, d'authentification et de multiplexage (1) et sont utilisées pour le trafic de données bidirectionnel entre le côté abonné et le côté ISP, étant précisé que pour étendre le procédé NAT (translation d'adresse de réseau) classique, une affectation d'adresse multiple est réalisable pendant une liaison IP et que les données d'adresse sont mises en mémoire dans le dispositif RDB (2) sous la forme d'une liste d'adresses AL.

7. Procédé selon l'une des revendications 1 à 6, **caractérisé en ce que** du côté du dispositif d'accès, d'authentification et de multiplexage (1), une surveillance du trafic de données propre à l'abonné est effectuée à l'aide d'un dispositif de surveillance approprié (6) et est utilisée comme base pour la désactivation de la liaison IP, des critères de temps comme la durée du temps sans transmission étant utilisés comme critère pour une désactivation.

8. Procédé selon l'une des revendications 3 à 7, **caractérisé en ce que** les critères pour la désactivation de la liaison entre le réseau de télécommunication et le réseau IP sont mis en mémoire spécifiquement pour l'abonné dans le dispositif de mémorisation RDB (2) et peuvent être modifiés pour chaque abonné au moins côté exploitant du réseau, et aussi à titre optionnel côté abonné.

9. Procédé selon l'une des revendications 3 à 8, **caractérisé en ce que** les critères pour l'activation de la liaison entre le réseau de télécommunication et le réseau IP sont mis en mémoire spécifiquement pour l'abonné dans le dispositif de mémorisation RDB (2) et peuvent être modifiés au moins côté exploitant du réseau, et aussi à titre optionnel côté abonné, étant précisé qu'en plus du critère de la transmission de données, des critères de priorité supplémentaires peuvent être réalisés pour la réactivation, comme des catégories de priorité ou de qualité de service QoS souscrite.

10. Procédé selon l'une des revendications 1 à 9, **caractérisé en ce qu'**un échange d'informations entre le dispositif d'accès, d'authentification et de multiplexage (1) et le second dispositif d'authentification (3) est étendu avec des informations appropriées, afin de détecter une liaison IP sur toutes les phases de désactivation du dispositif d'accès, d'authentification et de multiplexage (1).

11. Procédé selon l'une des revendications 1 à 10, **caractérisé en ce qu'**un échange d'informations entre le dispositif d'accès, d'authentification et de multiplexage (1) et le second dispositif d'authentification (3) est étendu avec des informations appropriées, afin de permettre une activation, côté ISP, de liaisons temporairement désactivées entre les dispositifs, pour permettre un trafic par courrier électronique avec l'abonné.

12. Procédé selon l'une des revendications 3 à 11, **caractérisé en ce que**, en vue de la réactivation, côté ISP, d'une liaison désactivée, il est convenu d'une adresse de référence entre le dispositif d'accès, d'authentification et de multiplexage (1) et le second dispositif d'authentification (3), qui est mise à jour côté dispositif d'accès, d'authentification et de multiplexage (1) à l'intérieur d'une liste appropriée RRL (liste de référence inversée), dans le dispositif de mémorisation RDB (2).

13. Procédé selon la revendication 12, **caractérisé en ce que** le second dispositif d'authentification (3), en vue de la réactivation, côté ISP, d'une liaison désactivée, envoie l'adresse de référence concernée, à l'intérieur d'un ordre d'activation, au dispositif d'accès, d'authentification et de multiplexage (1), lequel effectue en conséquence une activation de la liaison d'abonné avec le fournisseur de service Internet ISP.

14. Procédé selon l'une des revendications 3 à 13, **caractérisé en ce que** la fonctionnalité du dispositif de mémorisation RDB (2) est réalisée comme extension de banques de données présentes dans le réseau de communication.

15. Procédé selon l'une des revendications 1 à 14, **caractérisé en ce que** les fonctionnalités du dispositif d'accès, d'authentification et de multiplexage (1) et du second dispositif d'authentification (3) sont réparties sur différents noeuds de réseau à l'intérieur du réseau de télécommunication, comme SGSN, GGSN et HLR dans le réseau GSM, ou sur plusieurs éléments de réseau d'un réseau ISP, ou sur des noeuds de réseau des deux réseaux.

16. Procédé selon l'une des revendications 1 à 15, **caractérisé en ce que** les fonctionnalités du dispositif d'accès, d'authentification et de multiplexage (1) et du second dispositif d'authentification (3) s'appliquent aussi entre des réseaux de télécommunication du même type ou différents avec une commutation de données par paquets, par exemple entre au moins des réseaux GSM-GPRS, des réseaux UMTS et/ou des réseaux X.25.

17. Dispositif pour relier un terminal de communication prévu côté abonné à un réseau IP par l'intermédiaire d'un réseau de communication à commutation, étant précisé qu'un dispositif d'accès, d'authentification et de multiplexage (1) disposé dans le réseau de communication ou dans un noeud de numérotation directe du réseau IP dispose d'un premier dispositif d'authentification (7) qui est en communication avec un second dispositif d'authentification (3), propre au fournisseur de service Internet et installé dans le réseau IP, **caractérisé par** le dispositif d'accès, d'authentification et de multiplexage (1) pour désactiver la liaison entre le réseau de télécommunication et le réseau IP pendant le temps sans trafic d'une liaison IP entre l'abonné et le réseau IP, et pour maintenir la liaison entre le terminal de communication prévu côté abonné et le réseau de communication, et par un dispositif de mémorisation RDB (2) pour mettre en mémoire les données d'authentification propres à l'abonné et à la session qui sont affectées à la liaison IP, la liaison IP concernée étant activée automatiquement lors d'un nouveau trafic de données de l'abonné grâce au dispositif d'accès, d'authentification et de multiplexage (1) avec le recours aux données d'authentification propres à l'abonné et à la session qui ont été mises en mémoire dans le dispositif RDB.

18. Dispositif selon la revendication 17, **caractérisé en ce qu'**il est prévu des mémoires pour les données d'authentification propres à l'abonné et à la session (SAD) lors d'un établissement de liaison commandé par l'abonné, c'est-à-dire lors de l'initialisation d'une session, du côté du dispositif d'accès, d'authentification et de multiplexage (1), et **en ce que** pour les données d'authentification propres à l'abonné et à la session (SAD), on dispose pour la mise en mémoire temporaire, au moins pendant la session complète propre à l'abonné, du dispositif de mémorisation RDB (2) qui est relié au dispositif d'accès, d'authentification et de multiplexage (1).
